# EUROPÄISCHE PATENTANMELDUNG

(11) **EP 3 989 183 A1**
(43) Veröffentlichungstag der Anmeldung: **27.04.2022**
(21) Anmeldenummer: 21203089.4
(22) Anmeldetag: 18.10.2021
(51) Int. Cl.: G06V 40/16, G06V 20/64, G06V 10/12, G06V 40/40

(54) **VERFAHREN UND ANORDNUNG ZUR OPTISCHEN ERFASSUNG EINES KOPFES EINER ZU ÜBERPRÜFENDEN PERSON AN EINER ZUTRITTSKONTROLLSTATION**

(30) Priorität: 22.10.2020 DE 102020127880
(71) Anmelder: Bundesdruckerei GmbH, 10969 Berlin (DE)
(72) Erfinder: Trölenberg, Stefan, 15749 Mittenwalde (DE); Wolf, Andreas, 13158 Berlin (DE)
(74) Vertreter: Hentrich Patent- & Rechtsanwälte PartG mbB

(57) **Zusammenfassung**

Die Erfindung betrifft ein Verfahren zur optischen Erfassung eines Kopfes einer zu überprüfenden Person (200) an einer Zutrittskontrollstation (104), umfassend die folgenden Schritte:
- Optisches Erfassen eines frontal ausgerichteten Portraitbilds (114) des Kopfes der zu überprüfenden Person (200) mittels einer ersten Kamera (102) und gewinnen eines ersten zweidimensionalen Datensatzes aus dem Portraitbild (114),
- Optisches Erfassen eines Profilbilds (116) von wenigstens einer der Seiten des Kopfes der zu überprüfenden Person (200) mittels der ersten Kamera (102) oder mittels einer zweiten Kamera (112) und gewinnen eines zweiten zweidimensionalen Datensatzes aus dem Profilbild (116),
- Gewinnen wenigstens einer Tiefeninformation durch das Zusammenführen des ersten Datensatzes mit dem zweiten Datensatz mittels einer Auswerteeinheit (108) einer Prozessoreinheit (106), und
- Abgleichen der Datensätze sowie der Tiefeninformation mit auf oder in einem Identitätsdokument enthaltenen oder gespeicherten Referenzwerten. Die Erfindung betrifft außerdem ein Verfahren zur optischen Erfassung einer zu überprüfenden Person (200).

Die Erfindung betrifft außerdem eine Anordnung (100) zur Durchführung des Verfahrens.

## Beschreibung

Die Erfindung betrifft ein Verfahren zur optischen Erfassung eines Kopfes einer zu überprüfenden Person an einer Zutrittskontrollstation und eine entsprechende Anordnung zur Durchführung des Verfahrens.

Derartige Verfahren und Anordnungen werden beispielsweise genutzt, um einen Abgleich der Referenzdaten, die auf einem Identitätsdokument, wie auf einem Personalausweis oder einem Reisepass gespeichert sind, automatisiert durchzuführen. Häufig dient für den Abgleich dabei das Portraitbild, welches auf das Ausweis- oder das Personaldokument aufgedruckt ist. Dieses zweidimensionale Portraitbild könnte jedoch gefälscht werden, sodass ein Abgleich mit weiteren Daten sinnvoll und zweckmäßig erscheint. Als Alternative zur Fälschung des Portraitbilds auf dem Dokument könnte ein sogenannter Morphing-Angriff erfolgen, bei dem aus einer Mehrzahl unterschiedlicher Portraitfotos eine "Mischung generiert" wird, die dem Portraitbild auf dem Identitätsdokument nahekommt oder ähnelt. Als weitere Alternative zur Fälschung des Portraitbilds auf dem Dokument könnte ein sogenannter Masken-Angriff erfolgen, bei welchem eine Maske in ihrer zweidimensionalen und damit frontalen Projektion dem Portraitbild auf dem Identitätsdokument nahekommt oder ähnelt. Um derartige Angriffe vermeiden zu können gäbe es die Möglichkeit, dreidimensionale Datensätze auf einem Chip des Identitätsdokuments zu hinterlegen, wobei es in der Praxis aber aufgrund der damit einhergehenden Hardwareanforderungen nur schwer ist, die dreidimensionalen und damit sehr datenintensiven Bilder zu erfassen, um diese mit den Referenzdaten des Identitätsdokuments abzugleichen.

Es ist daher die Aufgabe der vorliegenden Erfindung, ein verbessertes Verfahren und eine verbesserte Anordnung für die Verifikation einer zu überprüfenden Person an einer Zutrittskontrollstation unter Beachtung einer erhöhten Datensparsamkeit bereitzustellen.

Diese Aufgabe wird durch ein Verfahren mit den Merkmalen des Anspruchs 1 und durch eine Anordnung mit den Merkmalen des Anspruchs 13 gelöst. Vorteilhafte Ausgestaltungen mit zweckmäßigen Weiterbildungen der Erfindung sind in den abhängigen Ansprüchen angegeben.

Das erfindungsgemäße Verfahren zur optischen Erfassung eines Kopfes einer zu überprüfenden Person an einer Zugangskontrollstation umfasst insbesondere die folgenden Schritte:
- optisches Erfassen eines frontal ausgerichteten Portraitbilds des Kopfes der zu überprüfenden Person mittels einer ersten Kamera und gewinnen eines ersten zweidimensionalen Datensatzes aus dem Portraitbild,
- optisches Erfassen eines Profilbilds von wenigstens einer der Seiten des Kopfes der zu überprüfenden Person mittels der ersten Kamera oder mittels einer zweiten Kamera und gewinnen eines zweiten zweidimensionalen Datensatzes aus dem Profilbild,
- Gewinnen wenigstens einer Tiefeninformation durch das Zusammenführen des ersten Datensatzes mit dem zweiten Datensatz mittels einer Auswerteeinheit einer Prozessoreinheit, und
- Abgleichen der Datensätze sowie der Tiefeninformation mit auf oder in einem Identitätsdokument enthaltenen oder gespeicherten Referenzwerten.

Mit diesem Verfahren lassen sich also auf einfache Weise aus zwei zweidimensionalen Daten eine Tiefeninformation gewinnen, die deutlich datensparsamer sind, als die Daten die für einen Abgleich mit einem vollständigen 3D-Modell erforderlich wären. Gleichzeitig lässt sich auf diese Weise eine Fälschung der Identitätsdokumente deutlich erschweren, wobei zudem eine verbesserte "Presentation Attack Detection" (kurz: PAD) und ferner Falschzutritten vorgebeugt wird. Es liegt auch eine geringere Anzahl an Falschzurückweisungen vor. Morphing-Fälle und Masken-Angriffe, die auf die frontale Projektion abzielen, werden durch das erfindungsgemäße Verfahren deutlich einfacher erkannt.

Durch die Erfassung des zusätzlichen Profilbilds können weitere Informationen als Referenzwerte gespeichert und verglichen werden, sodass es beispielsweise möglich ist, dass das Profilbild als Farbfoto derart erfasst wird, dass sich der Kopf der zu überprüfenden Person aufgrund der Kontrastierung von dem hinter dem Kopf liegenden Fotohintergrund abhebt, und dass der zweite Datensatz aus dem Verlauf wenigstens einer der Kopfpartien, insbesondere aus dem Verlauf der Stirn und/oder der Nase und/oder den Lippen und/oder des Kinns der zu überprüfenden Person, gewonnen wird. Auf diese Weise können also die Verläufe der Kopfpartien ergänzt werden zu dem frontal ausgerichteten Profilbild, womit eine besser abgesicherte Zutrittskontrolle erfolgen kann.

Auf diese Weise ist es zusätzlich möglich, dass aus dem Farbfoto wenigstens ein Referenzpunkt im Gesicht der zu überprüfenden Person bestimmt oder ermittelt wird, und dass der wenigstens eine Referenzprunkt dem zweiten Datensatz zugeteilt wird und damit einen Bestandteil des zweiten Datensatzes bildet. Die Referenzpunkte können mit oder ohne eine Bemaßung versehen sein und sich beispielsweise am Mundwinkel, an einer Augenposition oder an einer markanten Stelle des Ohres befinden. Vorzugsweise handelt es sich bei den Referenzpunkten um solche, die in Anlage C der ISO/IEC 14496-2:2004(E) enthalten sind. Dabei können eine Mehrzahl der Referenzpunkte oder der Merkmalspunkte für die Auswertung und die Identifizierung an einer Zutrittskontrollstation herangezogen werden.

Um die Datensätze in ihrem Umfang zu reduzieren, hat es sich als vorteilhaft erwiesen, wenn aus dem Profilbild ein Schattenriss extrahiert wird, und wenn der zweite Datensatz aus dem Verlauf im Schattenriss wenigstens einer der Kopfpartien, insbesondere aus dem Verlauf der Stirn und/oder der Nase und/oder den Lippen und/oder des Kinns, gewonnen wird.

Auch hierbei ist es von Vorteil, wenn aus dem Schattenriss wenigstens ein Referenzpunkt im Gesicht der zu überprüfenden Person bestimmt oder ermittelt wird, und wenn der wenigstens eine Referenzpunkt dem zweiten Datensatz zugeteilt wird, damit dieser einen Bestandteil des zweiten Datensatzes bildet. Auf diese Weise lassen sich auch aus dem Schattenriss markante Punkte extrahieren, die dann beim Abgleichen der Datensätze mit der Tiefeninformation und den auf dem Identitätsdokument enthaltenen oder gespeicherten Referenzwerten für eine zuverlässige Verifikation der zu überprüfenden Person herangezogen werden kann.

Es ist ferner von Vorteil, wenn aus dem Portraitbild wenigstens ein Merkmalspunkt gemäß Anlage C der ISO/IEC 14496-2:2004 ermittelt und dem ersten Datensatz zugeteilt wird, damit dieser einen Bestandteil des ersten Datensatzes bildet. Somit lassen sich also auch Merkmalspunkte aus dem Portraitbild extrahieren, die ebenfalls auf dem Profilbild vorhanden sein müssen, wie beispielsweise die Merkmalspunkte der Ohren, beispielsweise Merkmalspunkte 10.1 bis 10.6 oder der Mund- oder Backenpartien, wie beispielsweise die Merkmalspunkte 5.1 oder 5.2.

Es hat sich zur Vereinfachung der Anordnung und des Verfahrens als vorteilhaft erwiesen, wenn die zu überprüfende Person veranlasst wird, den Kopf zu drehen, und wenn die erste Kamera das Portraitbild dann erfasst, wenn eine Symmetriebedingung des Gesichts der zu überprüfenden Person von der Prozessoreinheit detektiert wird.

Dabei kann eine Symmetriebedingung dann erfüllt sein, wenn ein detektierter Abstand zwischen einer Nasenspitze des Gesichts der zu überprüfenden Person zu einem ersten Auge im Wesentlichen dem detektierten Abstand der Nasenspitze zu einem zweiten Auge entspricht. Hierbei kann typischerweise ausgenutzt werden, dass die Augenmitten einen Abstand von 60 von 65 mm voneinander einhalten, der dann als Symmetriebedingung herangezogen werden kann. Alternativ oder ergänzend kann auch der Abstand der Nasenspitze zu einem Merkmalspunkt an den Ohren als Symmetriebedingung gelten.

Es besteht ferner die Möglichkeit, dass die Symmetriebedingung auch dann erfüllt ist, wenn in einem Zeitpunkt eine Paarung aus den Merkmalspunkten 10.1 mit 10.2 oder 10.3 mit 10.4 oder 10.5 mit 10.6 gemäß Anlage C der ISO/IEC 14496-2:2004 erfasst wird. Werden also beispielsweise die den Ohren zugehörigen Merkmalspunkte 10.1 und 10.2 zeitgleich "sichtbar", so ist davon auszugehen, dass der Strahlengang der erfassenden Kamera frontal auf das Gesicht der zu überprüfenden Person auftrifft. Entsprechendes gilt für die den Ohren zugehörigen Paare der Merkmalspunkte 10.3 mit 10.4 und 10.5 mit 10.6.

Beim Einsatz einer zweiten Kamera, ist es von Vorteil, wenn im Zeitpunkt des Detektierens der Symmetriebedingung die um 90 Grad gegenüber der ersten Kamera versetzte zweite Kamera das wenigstens eine Profilbild des Kopfes der zu überprüfenden Person erfasst. Auf diese Weise kann also sowohl das Portraitbild von der ersten Kamera als auch das Profilbild von der zweiten Kamera simultan erfasst werden, was mit einer deutlichen Reduzierung der für die Verifikation erforderlichen Zeit einhergeht. Dies ist insbesondere dann von Vorteil, wenn eine Vielzahl von zu überprüfenden Personen an der Zutrittskontrollstation ansteht, wie dies regelmäßig bei Großveranstaltungen, wie Fußballspielen oder Konzerten, oder auch beim Boarding eines Flugzeugs der Fall sein kann.

Um das Verfahren zusätzlich zu beschleunigen, hat es sich auch als vorteilhaft erwiesen, wenn die Kopfbewegung der zu überprüfenden Person durch Hervorrufen eines akustischen und/oder optischen Reizes provoziert wird, womit die zu überprüfende Person also veranlasst wird, den Kopf in eine vorgegebene Richtung zu bewegen oder zu drehen.

Bei heutigen Identitätsdokumenten, insbesondere bei Personalausweisen, ist zumeist lediglich das Porträtbild aufgedruckt, sodass es von Vorteil sein kann, wenn die Referenzwerte in Form von Datensätzen auf einem Chip des Identitätsdokuments gespeichert sind, wenn die Referenzwerte an der Zugangskontrollstation ausgelesen werden, wenn der erste Datensatz und der zweite Datensatz mit den auf dem Chip gespeicherten Datensätzen verglichen werden, und wenn nur beim Vorliegen einer Übereinstimmung zwischen den gespeicherten Datensätzen und den erfassten Datensätzen ein Zutritt oder ein Durchtritt an der Zutrittskontrollstation gewährt wird.

Die in Verbindung mit dem erfindungsgemäßen Verfahren erläuterten Vorteile, vorteilhaften Ausgestaltungen und Wirkungen gelten in gleicher Weise für die erfindungsgemäße Anordnung zur Durchführung des Verfahrens.

Die erfindungsgemäße Anordnung umfasst insbesondere eine der Zutrittskontrollstation zugeordnete erste Kamera, eine der Zutrittskontrollstation zugeordnete Prozessoreinheit, die ausgebildet ist, mit der der Zutrittskontrollstation zugeordneten Kamera über eine Kommunikationsverbindung zu kommunizieren, wobei die Prozessoreinheit eine Auswerteeinheit aufweist, welche ausgebildet ist, Daten, die mittels der der Zutrittskontrollstation zugeordneten ersten Kamera von der zu überprüfenden Person erfasst werden, weiterzuverarbeiten. Zusätzlich ist eine Ausgabeeinheit vorhanden, die ein von der Auswerteeinheit ermitteltes Verarbeitungsergebnis empfangen kann. Die erste Kamera ist eingerichtet, ein frontal ausgerichtetes Portraitbild des Kopfes der zu überprüfenden Person zu erfassen, womit die Prozessoreinheit einen ersten zweidimensionalen Datensatz aus dem Porträtbild gewinnt. Ferner ist die Anordnung ausgestaltet ein Profilbild von wenigstens einer der Seiten des Kopfes der zu überprüfenden Person zu erfassen, womit die Prozessoreinheit einen zweiten zweidimensionalen Datensatz aus dem Profilbild gewinnt, um ihn mit dem ersten Datensatz zur Gewinnung einer Tiefeninformation mittels der Auswerteeinheit zusammenzuführen. Die Anordnung umfasst außerdem eine Leseeinheit zum Auslesen eines Identitätsdokuments, womit die Auswerteeinheit eingerichtet ist, die Datensätze sowie die Tiefeninformation mit auf oder in dem Identitätsdokument enthaltenen oder gespeicherten Referenzwerten zu vergleichen.

Es ist die vorteilhafte, weil datensparsame, Möglichkeit gegeben, dass die Referenzwerte in Form von Datensätzen auf dem Chip des Identitätsdokuments gespeichert sind, und dass die Referenzwerte gemäß ISO/IEC 39794-5 (Stand: 2019) codiert auf dem Chip vorliegen. Die ISO/IEC 39794-5 stellt einen Standard für die Speicherung der Daten von biometrischen Gesichtsbildern bereit. In Identitätsdokumenten lassen sich die so codierten Daten als Referenz zur Verifikation der Identität von Personen durch Menschen oder mit Hilfe von automatisierten Verfahren verwenden. Außerdem ist es von Vorteil, dass die 2-dimensionalen oder 3-dimensionalen-Referenzdaten auch dem Chip annotiert vorliegen, beispielsweise mit Landmarken, die insbesondere MPEG-Feature-Punkten nach ISO/IEC 14496-2 entsprechen.

Diese erfindungsgemäße Anordnung ist also derart ausgebildet, dass eine Verifikation an einer Zutrittskontrollstation einer zu überprüfenden Person durchgeführt werden kann, welche über eine Prüfung eines bloß zweidimensionalen Datensatzes hinausgeht. Da kein vollständiger dreidimensionaler Datensatz zu verarbeiten ist, arbeitet die Anordnung sehr datensparsam.

Um die senkrecht zueinander ausgerichteten Bilder, nämlich das Portraitbild und das Profilbild erfassen zu können, hat es sich als vorteilhaft erwiesen, wenn die Kamera auf einer Schwenkeinrichtung befestigt und damit eingerichtet ist, das Portraitbild und das Profilbild zu erfassen. Alternativ kann auch die zu überprüfende Person dazu veranlasst werden, die Kopfhaltung zu verändern, um mittels der ortsfest angeordneten Kamera das Porträtbild und das Profilbild zu erfassen. Es besteht auch die Möglichkeit, geeignete Umlenkspiegel einzusetzen, womit lediglich eine einzige Kamera für die Aufzeichnung des Porträtbilds und des Profilbilds notwendig ist.

Alternativ oder ergänzend hat es sich als vorteilhaft erwiesen, eine der Zutrittskontrollstation zugeordnete zweite Kamera vorhanden ist, die eingerichtet ist, ebenfalls mit der Prozessoreinheit über eine Kommunikationsverbindung zu kommunizieren, und wenn die optische Achse der zweiten Kamera senkrecht bezüglich der optischen Achse der ersten Kamera ausgerichtet ist, damit das Portraitbild und das Profilbild simultan erfassbar sind. Der Einsatz der zweiten Kamera reduziert die Zeit für eine Verifikation einer zu überprüfenden Person.

Hinsichtlich der Ausgestaltung des Verfahrens ist die genutzte Reihenfolge der genannten Verfahrensschritte zwar zweckmäßig, aber nicht zwingend. Beispielweise kann zuerst das Profilbild und dann das Portraitbild erfasst werden oder umgekehrt. Eine simultane Erfassung von Profilbild und Portraitbild ist ebenfalls möglich.

Die vorstehend in der Beschreibung genannten Merkmale und Merkmals-kombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Anordnung zur optischen Erfassung einer zu überprüfenden Person,
- Fig. 2: eine schematische Darstellung einer Überprüfung des Vorliegens einer Symmetriebedingung, und
- Fig. 3: verschiedene Erfassungs- und Auswertemodi zur Verifikation einer zu überprüfenden Person an der Zutrittskontrollstation.

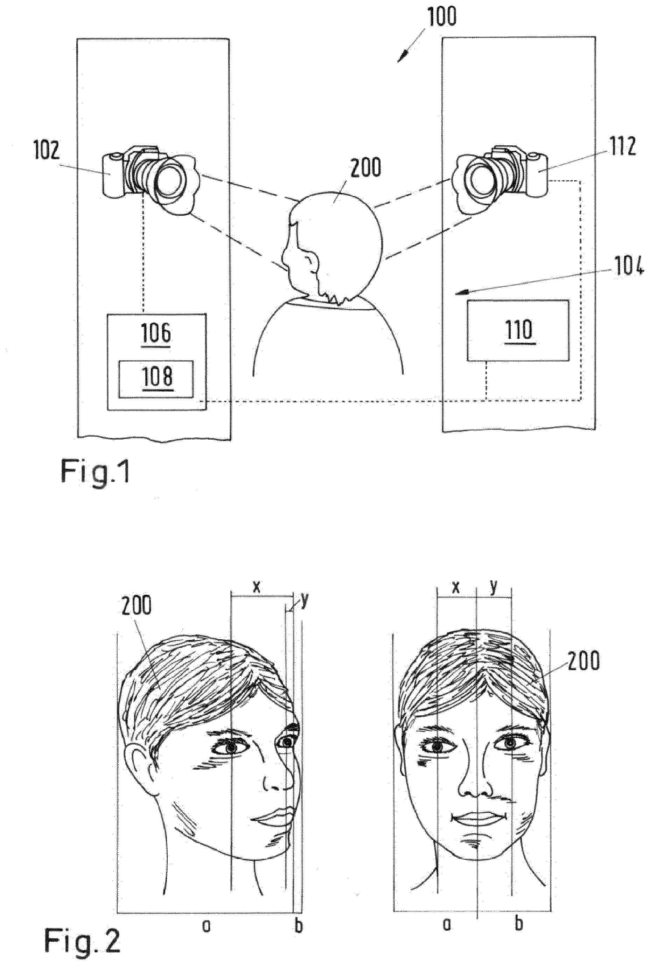

In Figur 1 ist eine Anordnung 100 zur optischen Erfassung eines Kopfes einer zu überprüfenden Person 200 an einer Zutrittskontrollstation 104 gezeigt. Die vorliegend exemplarisch gezeigte Zutrittskontrollstation 104 bzw. die Anordnung 100 umfassen eine erste Kamera 102 sowie eine zweite Kamera 112, deren optische Achsen senkrecht zueinander ausgerichtet sind und senkrecht aufeinander stehen. Es sei angemerkt, dass der Einsatz der zweiten Kamera 112 zwar zweckmäßig, aber nicht zwingend notwendig ist, da der Kopf der zu überprüfenden Person 200 auch zweifach durch die erste Kamera 102 erfasst werden könnte. Beide Kameras 102, 112 sind über eine punktiert dargestellte Kommunikationsverbindung mit einer Prozessoreinheit 106 verbunden, die ihrerseits eine Auswerteeinheit 108 aufweist, um diejenigen Daten, die mittels der Kameras 102, 112 von der zu überprüfenden Person 200 erfasst werden, weiterzuverarbeiten, damit sie anschließend in ein Verarbeitungsergebnis gegossen und an nach Übermittelung an eine Ausgabeeinheit 110 von letzterer ausgegeben werden können.

Die erste Kamera 102 ist vorliegend eingerichtet, ein frontal ausgerichtetes Portraitbild 114 der zu überprüfenden Person 200 zu erfassen, womit die Prozessoreinheit 106 einen ersten zweidimensionalen Datensatz aus dem Portraitbild 114 gewinnt. Die zweite Kamera 112 ist eingerichtet wenigstens ein Profilbild 116 des Kopfes der zu überprüfenden Person 200 zu erfassen, womit die Prozessoreinheit 106 einen zweiten zweidimensionalen Datensatz aus dem Profilbild 116 gewinnt. Die Prozessoreinheit 106 bzw. ihre Auswerteeinheit 108 sind eingerichtet, den ersten zweidimensionalen Datensatz aus dem Portraitbild 114 und den zweiten zweidimensionalen Datensatz aus dem Profilbild 116 zusammenzuführen, um daraus eine Tiefeninformation zu gewinnen. Somit entsteht ein "quasi"-3D-Bild.

Der so neu gewonnene Datensatz kann dann mit Informationen auf einem Identitätsdokument, insbesondere solchen, die auf einem Chip des Identitätsdokuments gespeichert sind, abgeglichen werden. Für den Abgleich umfasst die Anordnung 100 zusätzlich eine nicht näher gezeigte Leseeinheit zum Auslesen des Identitätsdokuments, womit die Auswerteeinheit 108 eingerichtet ist, die Datensätze sowie die Tiefeninformation mit auf oder in dem Identitätsdokument enthaltenen oder gespeicherten Referenzwerten zu vergleichen, um das Vergleichsergebnis an der Ausgabeeinheit 110 auszugeben und anschließend den Zutritt zu gewähren oder zu verbieten.

Die Zeitpunkte, an welchen die jeweiligen Bilder erfasst werden sollten, sind geeignet zu wählen, um die Anhäufung von unnötig große Datenmengen zu vermeiden. Vorzugsweise wird die zu überprüfende Person 200 veranlasst, den Kopf zu drehen, wobei das Portraitbild 114 von der ersten Kamera 102 dann erfasst wird, wenn eine Symmetriebedingung des Gesichts der zu überprüfenden Person 200 von der Prozessoreinheit 106 detektiert wird. Die Kopfbewegung der zu überprüfenden Person 200 kann beispielsweise mittels eines akustischen und/oder optischen Reizes provoziert werden.

Der Einsatz einer einzigen Kamera 102 ist auch dann möglich, wenn linksseitig und/oder rechtsseitig der zu überprüfenden Person 200 eine Spiegelanordnung vorhanden ist, deren Spiegel derart ausgerichtet sind, dass beim Erfassen des Portraitbilds 114 zugleich ein in einem der Spiegel sichtbares Profilbild 116 (mit-)erfasst wird.

Diese Symmetriebedingung ist anhand von Figur 2 illustriert, wobei diese insbesondere dann erfüllt ist, wenn der detektierte Abstand zwischen einer Nasenspitze des Gesichts der zu überprüfenden Person 200 zu einem seiner Augen zu einer seiner Pupillen im Wesentlichen dem detektierten Abstand von der Nasenspitze zu dem anderen Auge, insbesondere zu seiner anderen Pupille entspricht. Alternativ oder ergänzend kann eine Symmetriebedingung auch dann erfüllt sein, wenn in einem Zeitpunkt eine Paarung aus den Merkmalspunkten 10.1 mit 10.2 oder 10.3 mit 10.4 oder 10.5 mit 10.6 gemäß Anlage C der ISO/IEC 14496-2:2004 erfasst wird. Auch andere als den Ohren zugehörige Merkmalspunkte können zur Prüfung des Vorliegens einer Symmetriebedingung herangezogen werden, wie beispielsweise die Mundwinkel oder die Punkte 5.1, 5.2 an der Backenpartie der zu überprüfenden Person 200. Um die Verifikation besonders zügig durchführen zu können, hat es sich als vorteilhaft erwiesen, wenn im Zeitpunkt des Detektierens der Symmetriebedingung die um 90 Grad gegenüber der ersten Kamera 102 versetzte zweite Kamera 112 das wenigstens eine Profilbild 116 des Kopfes der zu überprüfenden Person 200 erfasst während die erste Kamera 102 das Portraitbild 114 ― vorzugsweise zeitgleich - erfasst.

Da auf einem Identitätsdokument zumeist nur das zweidimensionale Porträtbild abgebildet ist und da auf die Abbildung eines zusätzlichen Profilbilds verzichtet wird, ist es von Vorteil, wenn die Referenzwerte in Form von Datensätzen auf einem Chip des Identitätsdokuments gespeichert sind, wenn die Referenzwerte an der Zugangskontrollstation 104 ausgelesen werden, wenn der von der ersten Kamera 102 erfasste erste Datensatz und der von der zweiten Kamera 112 erfasste zweite Datensatz mit den auf dem Chip gespeicherten Datensätzen verglichen werden, und dass nur beim Vorliegen einer Übereinstimmung zwischen den gespeicherten Datensätzen und den erfassten Datensätzen ein Zutritt oder ein Durchtritt an der Zutrittskontrollstation 104 gewährt wird.

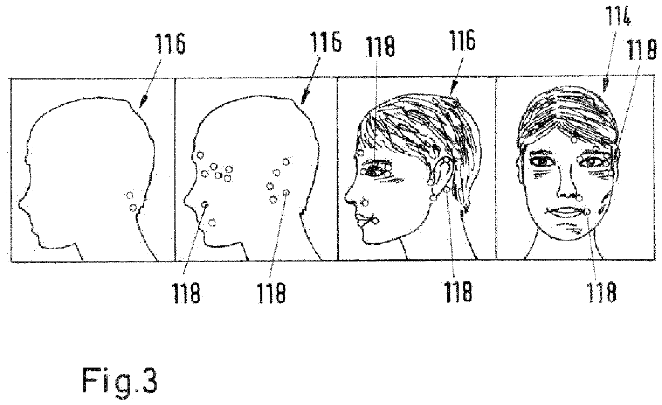

In Figur 3 ist an erster Stelle links zu erkennen, dass es von Vorteil sein kann, dass aus dem Profilbild 116 lediglich ein Schattenriss extrahiert wird, wodurch sich der zweite Datensatz beispielsweise aus dem Verlauf wenigstens einer der Kopfpartien gewinnen lässt. Durch die Bildung eines Schattenrisses werden die Daten deutlich reduziert aufgrund der Reduktion der im Foto enthaltenen Informationen. Aus dem Schattenriss kann beispielsweise der Verlauf der Stirn und/oder der Nase und/oder den Lippen und/oder des Kinns zur Gewinnung des zweiten Datensatzes herangezogen werden. An zweiter Stelle von links ist der Schattenriss erneut zu erkennen, wobei zusätzlich aus dem (binären) Schattenriss wenigstens ein Referenzpunkt 118 im Gesicht der zu überprüfenden Person 200 bestimmt oder ermittelt wird, wobei der wenigstens eine Referenzpunkt 118 dem zweiten Datensatz ebenfalls zugeteilt wird, damit dieser einen Bestandteil des zweiten Datensatzes bildet und somit für eine Überprüfung herangezogen werden kann. Bei diesem Referenzpunkt kann es sich um einen Merkmalspunkt gemäß Anlage C der ISO/IEC 14496-2:2004 handeln. An dritter Stelle ist zu erkennen, dass das Profilbild 116 auch als ein Farbfoto vorliegen kann, wobei sich der Kopf der zu überprüfenden Person aufgrund der Kontrastierung von dem hinter dem Kopf liegenden Fotohintergrund abhebt, und wobei der zweite Datensatz aus dem Verlauf wenigstens einer der Kopfpartien, insbesondere aus dem Verlauf der Stirn und/oder der Nase und/oder den Lippen und/oder des Kinns, gewonnen wird. In dieser Darstellung ist zudem erkennbar, dass auch hier Referenzpunkte 118 im Gesicht der zu überprüfenden Person 200 bestimmt oder ermittelt werden können, und dass die Referenzpunkte 118 dem zweiten Datensatz ebenfalls zugeteilt werden, womit sie einen Bestandteil des zweiten Datensatzes bilden. Diese Referenzpunkte 118 können zugleich Referenzpunkte 118 des ganz rechts dargestellten Portraitbilds 114 sein, wodurch sich eine zuverlässige Verifikation der zu überprüfenden Person 200 vornehmen lässt.

Im Ergebnis wird mit der vorliegenden Erfindung die unbefugte Überwindung von biometrischen Zugangskontrollsystemen auf Gesichtsbildbasis mit Masken erschwert. Auch die unbefugte Überwindung von biometrischen Zugangskontrollsystemen auf Gesichtsbildbasis mit gemorphten (Referenz-)Bildern wird erschwert. Die Authentifizierung von Personen durch Menschen wird durch die zusätzlich zur Verfügung gestellten Merkmale, insbesondere aufgrund der erfindungsgemäß erhaltenen Tiefeninformation - ggfs. ergänzt um Daten betreffend die Nasenform, die Mundform oder die Ohrform - erleichtert, was insbesondere dann von Vorteil ist, wenn Teile des Gesichts verdeckt sind. Durch die zusätzlich erhaltene Tiefeninformation, die insbesondere um die Feature-Punkte aus Anlage C der ISO/IEC 14486-2:2004 ergänzt wird, werden die Erkennbarkeit und damit die Rate an Falschzurückweisungen verbessert. Unbefugte Zutritte an der Zutrittskontrollstation 104 sicher unterbunden.

### BEZUGSZEICHENLISTE

- 100: Anordnung
- 102: erste Kamera
- 104: Zutrittskontrollstation
- 106: Prozessoreinheit
- 108: Auswerteeinheit
- 110: Ausgabeeinheit
- 112: zweite Kamera
- 114: Portraitbild
- 116: Profilbild
- 118: Merkmalspunkt (nach ISO/IEC 14496-2:2004)
- 200: zu überprüfende Person

## Patentansprüche

1. Verfahren zur optischen Erfassung eines Kopfes einer zu überprüfenden Person (200) an einer Zutrittskontrollstation (104), umfassend die folgenden Schritte:
- Optisches Erfassen eines frontal ausgerichteten Portraitbilds (114) des Kopfes der zu überprüfenden Person (200) mittels einer ersten Kamera (102) und gewinnen eines ersten zweidimensionalen Datensatzes aus dem Portraitbild (114),
- Optisches Erfassen eines Profilbilds (116) von wenigstens einer der Seiten des Kopfes der zu überprüfenden Person (200) mittels der ersten Kamera (102) oder mittels einer zweiten Kamera (112) und gewinnen eines zweiten zweidimensionalen Datensatzes aus dem Profilbild (116),
- Gewinnen wenigstens einer Tiefeninformation durch das Zusammenführen des ersten Datensatzes mit dem zweiten Datensatz mittels einer Auswerteeinheit (108) einer Prozessoreinheit (106), und
- Abgleichen der Datensätze sowie der Tiefeninformation mit auf oder in einem Identitätsdokument enthaltenen oder gespeicherten Referenzwerten.

2. Verfahren nach Anspruch 1, **dadurch gekennzeichnet, dass** das Profilbild (116) als Farbfoto derart erfasst wird, dass sich der Kopf der zu überprüfenden Person (200) aufgrund der Kontrastierung von dem hinter dem Kopf liegenden Fotohintergrund abhebt, und dass der zweite Datensatz aus dem Verlauf wenigstens einer der Kopfpartien, insbesondere aus dem Verlauf der Stirn und/oder der Nase und/oder den Lippen und/oder des Kinns, gewonnen wird.

3. Verfahren nach Anspruch 2, **dadurch gekennzeichnet, dass** aus dem Farbfoto wenigstens ein Referenzpunkt (118) im Gesicht der zu überprüfenden Person (200) bestimmt oder ermittelt wird, und dass der wenigstens eine Referenzpunkt (118) dem zweiten Datensatz zugeteilt wird und damit einen Bestandteil des zweiten Datensatzes bildet.

4. Verfahren nach einem der Ansprüche 1 bis 3, **dadurch gekennzeichnet, dass** aus dem Profilbild (116) ein Schattenriss extrahiert wird, und dass der zweite Datensatz aus dem Verlauf wenigstens einer der Kopfpartien, insbesondere aus dem Verlauf der Stirn und/oder der Nase und/oder den Lippen und/oder des Kinns, gewonnen wird.

5. Verfahren nach Anspruch 4, **dadurch gekennzeichnet, dass** aus dem Schattenriss wenigstens ein Referenzpunkt (118) im Gesicht der zu überprüfenden Person (200) bestimmt oder ermittelt wird, und dass der wenigstens eine Referenzpunkt (118) dem zweiten Datensatz zugeteilt wird, damit dieser einen Bestandteil des zweiten Datensatzes bildet.

6. Verfahren nach einem der Ansprüche 1 bis 5, **dadurch gekennzeichnet, dass** aus Portraitbild (114) wenigstens ein Merkmalspunkt (118) gemäß Anlage C der ISO/IEC 14496-2:2004 ermittelt und dem ersten Datensatz zugeteilt wird, damit dieser einen Bestandteil des ersten Datensatzes bildet.

7. Verfahren nach einem der Ansprüche 1 bis 6, **dadurch gekennzeichnet, dass** die zu überprüfende Person (200) veranlasst wird, den Kopf zu drehen, und dass die erste Kamera (102) das Portraitbild (114) dann erfasst, wenn eine Symmetriebedingung des Gesichts der zu überprüfenden Person (200) von der Prozessoreinheit (106) detektiert wird.

8. Verfahren nach Anspruch 7, **dadurch gekennzeichnet, dass** die Symmetriebedingung dann erfüllt ist, wenn der detektierte Abstand zwischen einer Nasenspitze des Gesichts der zu überprüfenden Person (200) zu einem ersten Auge im Wesentlichen dem detektierten Abstand der Nasenspitze zu einem zweiten Auge entspricht.

9. Verfahren nach Anspruch 7 oder 8, **dadurch gekennzeichnet, dass** die Symmetriebedingung dann erfüllt ist, wenn in einem Zeitpunkt eine Paarung aus den Merkmalspunkten 10.1 mit 10.2 oder 10.3 mit 10.4 oder 10.5 mit 10.6 gemäß Anlage C der ISO/IEC 14496-2:2004 erfasst wird.

10. Verfahren nach einem der Ansprüche 7 bis 9, **dadurch gekennzeichnet, dass** im Zeitpunkt des Detektierens der Symmetriebedingung die um 90 Grad gegenüber der ersten Kamera (102) versetzte zweite Kamera (112) das wenigstens eine Profilbild (116) des Kopfes der zu überprüfenden Person (200) erfasst.

11. Verfahren nach einem der Ansprüche 7 bis 10, **dadurch gekennzeichnet, dass** die Referenzwerte in Form von Datensätzen auf einem Chip des Identitätsdokuments gespeichert sind, und dass die Referenzwerte gemäß ISO/IEC 39794-5 codiert auf dem Chip vorliegen.

12. Verfahren nach einem der Ansprüche 1 bis 11, **dadurch gekennzeichnet, dass** die Referenzwerte in Form von Datensätzen auf einem Chip des Identitätsdokuments gespeichert sind, dass die Referenzwerte an der Zugangskontrollstation (104) ausgelesen werden, dass der erste Datensatz und der zweite Datensatz mit den auf dem Chip gespeicherten Datensätzen verglichen werden, und dass nur beim Vorliegen einer Übereinstimmung zwischen den gespeicherten Datensätzen und den erfassten Datensätzen ein Zutritt oder ein Durchtritt an der Zutrittskontrollstation (104) gewährt wird.

13. Anordnung (100) zur Durchführung des Verfahrens nach einem der Ansprüche 1 bis 12 an einer Zutrittskontrollstation (104), mit einer der Zutrittskontrollstation (104) zugeordneten ersten Kamera (102), mit einer der Zutrittskontrollstation (104) zugeordneten Prozessoreinheit (106), die ausgebildet ist, mit der der Zutrittskontrollstation (104) zugeordneten Kamera (102) über eine Kommunikationsverbindung zu kommunizieren, wobei die Prozessoreinheit (106) eine Auswerteeinheit (108) aufweist, welche ausgebildet ist, Daten, die mittels der der Zutrittskontrollstation (104) zugeordneten ersten Kamera (102) von der zu überprüfenden Person (200) erfasst werden, weiterzuverarbeiten und anschließend ein sich daraus ergebendes Verarbeitungsergebnis an eine Ausgabeeinheit (110) zu übermitteln, wobei die erste Kamera (102) eingerichtet ist, ein frontal ausgerichtetes Portraitbild (114) des Kopfes der zu überprüfenden Person (200) zu erfassen, womit die Prozessoreinheit (106) einen ersten zweidimensionalen Datensatz aus dem Portraitbild (114) gewinnt, wobei ein Profilbild (116) von wenigstens einer der Seiten des Kopfes der zu überprüfenden Person (200) erfassbar ist, womit die Prozessoreinheit (106) einen zweiten zweidimensionalen Datensatz aus dem Profilbild (116) gewinnt, um ihn mit dem ersten Datensatz zur Gewinnung einer Tiefeninformation mittels der Auswerteeinheit (108) zusammenzuführen, sowie mit einer Leseeinheit zum Auslesen eines Identitätsdokuments, womit die Auswerteeinheit (108) eingerichtet ist, die Datensätze sowie die Tiefeninformation mit auf oder in dem Identitätsdokument enthaltenen oder gespeicherten Referenzwerten zu vergleichen.

14. Anordnung nach Anspruch 13, **dadurch gekennzeichnet, dass** die erste Kamera (102) auf einer Schwenkeinrichtung befestigt und damit eingerichtet ist, das Portraitbild (114) und das Profilbild (116) zu erfassen.

15. Anordnung nach Anspruch 13, **dadurch gekennzeichnet, dass** eine der Zutrittskontrollstation (104) zugeordnete zweite Kamera (112) vorhanden ist, die eingerichtet ist, ebenfalls mit der Prozessoreinheit (106) über eine Kommunikationsverbindung zu kommunizieren, und dass die optische Achse der zweiten Kamera (112) senkrecht bezüglich der optischen Achse der ersten Kamera (102) ausgerichtet ist, damit das Portraitbild (114) und das Profilbild (116) simultan erfassbar sind.
